# NEW EUROPEAN PATENT SPECIFICATION

(11) **EP 1 499 814 B2**
(45) Date of publication and mention of the opposition decision: **11.12.2013**
(45) Mention of the grant of the patent: 13.02.2008
(21) Application number: 02749297.4
(22) Date of filing: 15.07.2002
(51) Int. Cl.: F16D 65/092, F16D 55/226, F16D 65/84

(54) **DISC BRAKE PAD**
BREMSBELAG FÜR SCHEIBENBREMSE
PLAQUETTE DE FREIN A DISQUE

(43) Date of publication of application: 26.01.2005
(73) Proprietor: Freni Brembo S.p.A., 24035 Curno (Bergamo) (IT)
(72) Inventor: DONADONI, Giuseppe, I-24044 Dalmine (Bergamo) (IT); GOTTI, Antonio, I-24031 Almenno San Salvatore (Bergamo) (IT)
(74) Representative: Crippa, Paolo Ernesto
(86) International application number: PCT/IT2002/000460
(87) International publication number: WO 2004/007986

(56) References cited:
- EP-B1- 0 341 610
- EP-B1- 0 984 188
- WO-A1-01//98680
- DE-A- 4 401 846
- DE-A1- 3 815 733
- DE-A1- 3 910 154
- DE-A1- 4 028 951
- DE-A1- 4 110 850
- DE-A1- 4 334 840
- DE-A1- 10 034 210
- DE-A1- 19 507 916
- DE-C2- 3 918 011
- DE-U- 1 966 979
- DE-U1- 84 267 135
- GB-A- 1 416 122
- GB-A- 2 118 649
- GB-A- 2 434 624
- JP-A- 11 101 279
- US-A- 4 394 891
- US-A- 4 926 978
- US-A- 5 358 079
- US-A- 6 032 767
- US-B1- 6 206 146
- US-B1- 6 234 284
- US-B1- 6 374 959
- Extract from the database of the Verband der Reibbelagindustrie e.

## Description

The present invention relates to a disc brake pad particularly for use in disc brakes for automotive use.

US-A-6 032 767 and US-B1-6 206 146 disclose a pad according to the preamble of claim 1.

It is known that, in a normal operative condition of a disc brake in which the pad is housed in its seat in the caliper body, the pad is substantially surrounded by the material of the caliper body.

This condition is particularly evident in very compact constructions such as those with one-piece caliper bodies (formed as single castings) or caliper bodies comprising two half-bodies (each formed by casting) in which the seat for the pads is in the form of a pocket suitable for housing them.

In other words, in these constructions, the pads are in contact with the parts of the caliper (the walls of the seat which houses them, the pistons, and the like) for most of their surface area, leading to a marked heat flow from the pad towards the caliper which contains it, during braking.

This results in continual generalized overheating of the caliper body which translates into a deterioration of the mechanical characteristics of the material of which it is made, into boiling of the brake fluid, localized deterioration due to high-temperature fatigue, structural distortions (for example of the pad seats), and the like.

There is therefore a need to provide disc brake pads which can limit the flow of heat between the pad and the caliper body which houses it.

The problem underlying the present invention is that of devising a disc brake pad which has structural and functional characteristics such as to satisfy the above-mentioned needs and at the same time to prevent the problems mentioned with reference to the prior art.

This problem is solved by a pad according to Claim 1. Further characteristics and the advantages of the pad according to the present invention will become clear from the following description of a preferred and nonlimiting embodiment, in which:

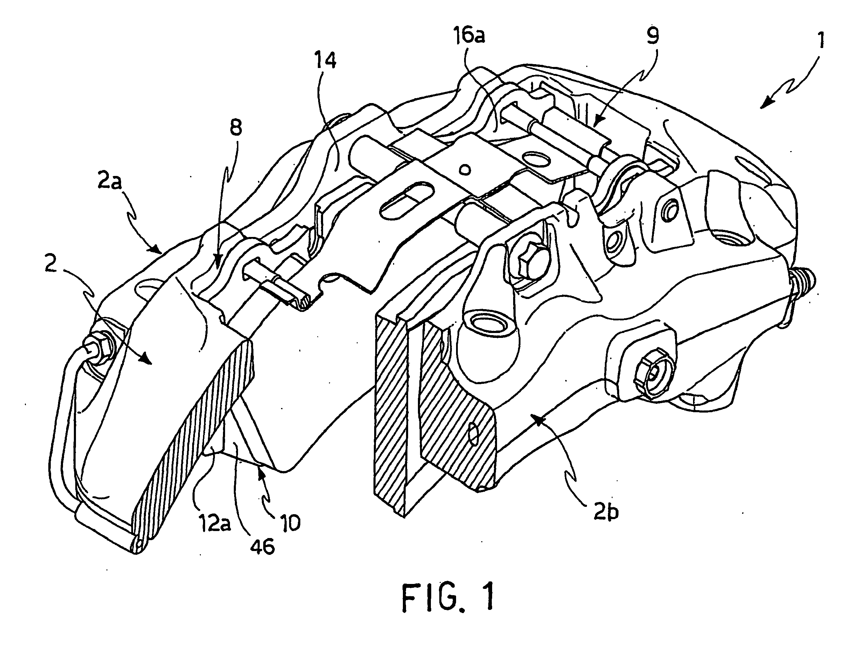

Figure 1 is a partially-sectioned, axonometric view of a disc-brake caliper comprising a caliper body and a pad according to the invention, housed in a seat of the caliper body,

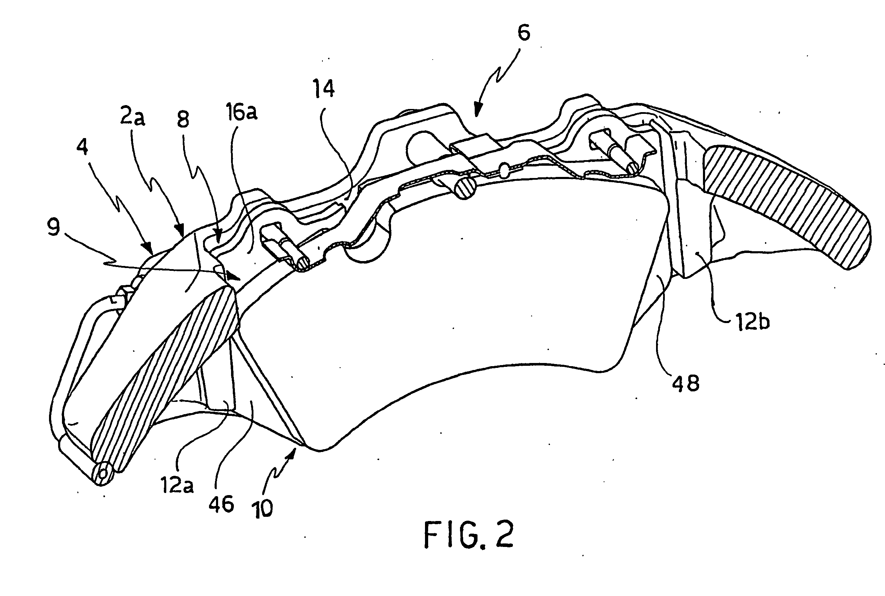

Figure 2 is a partially-sectioned axonometric view of a half-portion of the caliper body of Figure 1 which houses the pad,

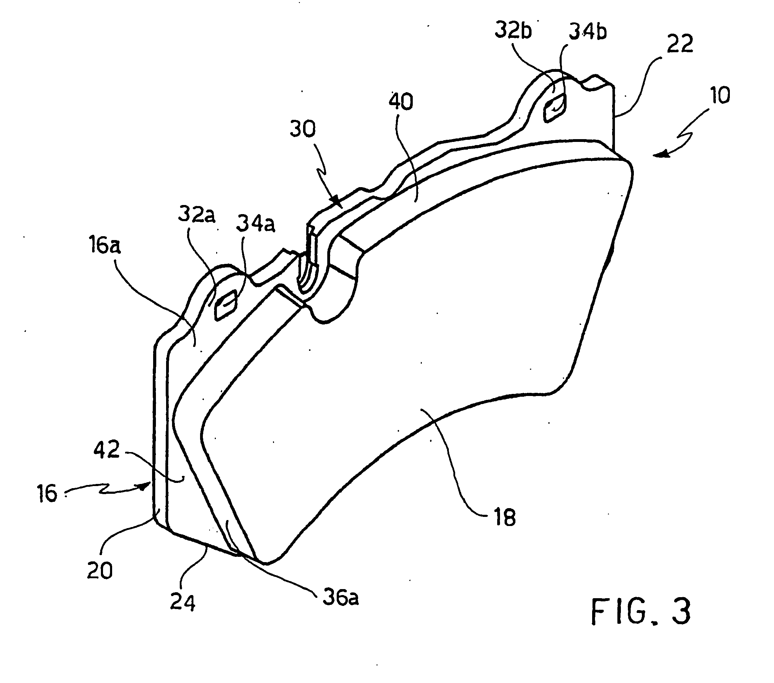

Figure 3 is an axonometric view of the pad of Figure 1,

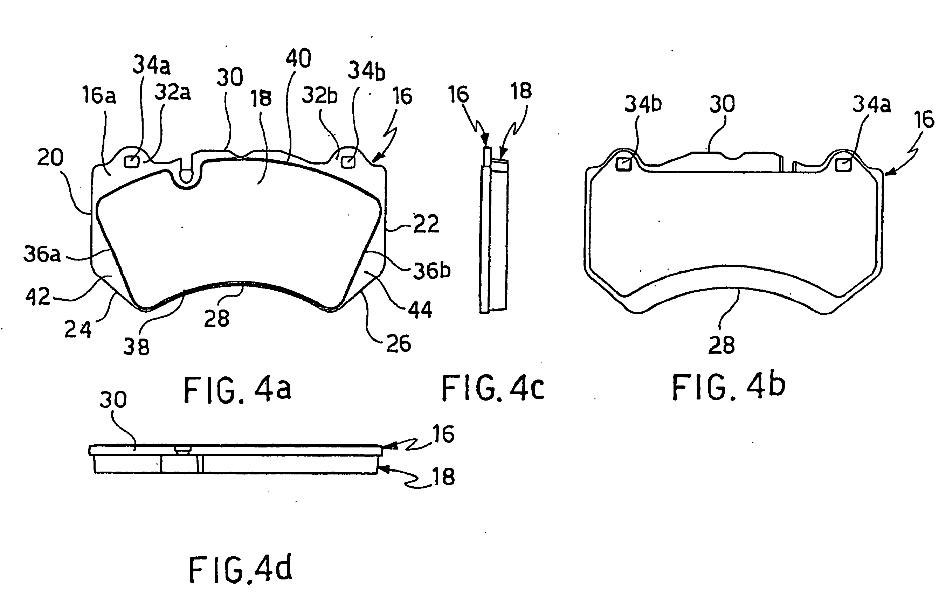

Figure 4a shows the pad of Figure 3 in a front view which shows the friction material supported by the plate,
Figure 4b shows the pad of Figure 4a in a rear view,
Figure 4c shows the pad of Figure 3 in a side view,
Figure 4d shows the pad of Figure 3 in a plan view taken in the direction of the insertion of the pad in the seat of the caliper body, and
Figure 5 is a front view of a further variant of the pad according to the invention.

With reference to the drawings, a fixed caliper for a disc brake, particularly for use in the automotive field, is wholly indicated 1.

The caliper 1 is to be fitted in a disc brake, astride a brake disc (not shown) fixed firmly to the wheel hub. The brake disc comprises a braking band which extends about an axis and has annular braking surfaces in planes that are parallel with one another and perpendicular to the axis.

The caliper 1 comprises a caliper body 2 fixed firmly to a portion of the vehicle (not shown) on which the disc brake is mounted.

In the embodiment described by way of example, the caliper body is formed in a single piece, that is, it is formed by a single casting. It is generally known as a "one-piece" caliper body.

In further variants, the caliper body is of the type formed as two half-bodies, for example, each produced by casting.

Irrespective of the method by which the caliper body 2 is produced, when the disc brake has been mounted on the user vehicle, the caliper body is arranged astride the brake disc, so that it is possible to identify an outer half-portion 2a of the caliper body 2 disposed between the vehicle wheel and the brake disc, and an inner half-portion 2b, disposed on the opposite of the disc to the outer half-portion 2a.

For the purposes of the present description, the two above-mentioned half-portions are substantially similar in structure and functional capacity and only one of them will therefore be referred to explicitly below.

When the disc brake has been mounted, a side covering region 4 of the half-portion 2a extends substantially so as to cover the braking surface of the brake-disc band. The outer half-portion also has an axial covering region 6 which at least partially spans the brake disc. In other words, the axial covering regions of the outer half-portion 2a and of the inner half-portion 2b of the caliper body 2 form the brake-disc cover which spans the disc.

The axial covering 6 has an opening 9 which can put the outside atmosphere into communication with the space inside the caliper body 2.

The outer half-portion 2a of the caliper body 2 has at least one seat 8 suitable for housing a pad 10.

According to one embodiment, the seat is produced by finishing machining operations performed on a semi-finished casting in order to define the abutment planes and the bearing surfaces, whilst achieving the desired tolerances.

A substantially parallelepipedal seat is preferably formed for the pad in the initial, semi-finished product, as a result of milling operations.

In other words, the seat 8 is configured as a pocket formed centrally in the outer half-portion 2a of the caliper body 2 and accessible from the axial covering region 6 thereof.

The seat is defined by a first side wall 12a and a second side wall 12b, as well as by a base wall 14. The side walls and the base wall, which are connected to one another continuously, form a type of housing, closed on at least three sides, for housing the pad 10.

The pad comprises a plate 16 having a support surface 16a for supporting friction material 18; the support surface 16a faces towards the braking surface of the brake-disc band when the pad 10 is housed in the seat 8 of the caliper body 2.

The plate 16, which fits the seat 8 of the caliper body 2, has a peripheral surface in which a first abutment surface 20 and a second abutment surface 22 can be identified.

The first abutment surface 20 is parallel to and opposite the second abutment surface 22 and they are connected to a lower surface 28.

The first abutment surface 20 and the second abutment surface 22 are connected to the lower surface 28, respectively, by a first connecting surface 24 and by a second connecting surface 26 which are not parallel to the abutment surfaces.

The peripheral surface of the plate 16 comprises an upper surface 30 connected directly to the first abutment surface 20 and to the second abutment surface 22, on the side remote from the connecting surface 24 and from the second connecting surface 26, respectively.

In the region of the upper surface 30, the plate 16 also has a first projection 32a and a second projection 32b, in which a first through-hole 34a and a second through-hole 34b, which are slot-shaped, are formed, respectively.

The friction material 18 of the pad 10 is shaped in a manner such that a first lateral region 36a and a second lateral region 36b are defined along its peripheral surface. When the friction material, thus shaped, is supported on the support surface 16a of the plate 16, the first lateral region 36a and the second lateral region 36b face towards the first abutment surface 20 and the second abutment surface 22 of the plate 16, respectively.

In a preferred embodiment, the friction material 18 of the pad 10 is shaped in a manner such that a lower arcuate region 38 and an upper arcuate region 40 are also defined along its peripheral surface. When the friction material, thus shaped, is supported on the support surface 16a of the plate 16, its lower arcuate region 38 substantially follows the lower surface 28 and its upper arcuate region 40 substantially follows the upper surface 30 of the peripheral surface of the plate 16.

The first lateral region 36a and the second lateral region 36b of the friction material 18 define on the support surface 16a of the plate 16, respectively, a first zone 42 and a second zone 44, which are free of friction material.

In other words, the lateral regions of the friction material 18 are not arranged parallel to the abutment surfaces of the plate 16 which they face towards but are recessed relative thereto, leaving the said zones free of further friction material.

The shaping of the friction material 18 is thus such that its lateral regions are appreciably spaced from the abutment surfaces of the plate 16, substantially representing a space for spacing the friction material 18 from the abutment surfaces of the plate.

The lateral regions of the friction material 18 are spaced from the abutment surfaces of the plate 16, and are recessed towards the interior of the plate 16.

The zones of the support surface 16a of the plate 16 which are free of friction material are substantially triangular, since the lateral region of the friction material, the abutment surface, and the connecting surface of the plate, which delimit them, are substantially flat.

According to the invention, the lateral regions of the friction material 18 adopt a substantially radial arrangement relative to the brake disc with which the caliper body which houses the pads can be associated.

The pad 10 is suitable for being housed in the seat 8 of the caliper body 2, the seat being accessible from the opening 9 provided in the axial covering region 6 of the half-portion of the caliper body 2. In the above-mentioned insertion configuration, the pad is substantially enveloped by the material of the caliper body.

In this configuration, the first abutment surface 20 and the second abutment surface 22 of the plate 16 are arranged facing the first side wall 12a and the second side wall 12b of the seat 8 of the caliper body 2, respectively.

By virtue of the way in which the friction material 18 is shaped, the friction material is spaced from the side walls of the seat 8 of the caliper body 2 which face towards the abutment surfaces of the plate 16.

In other words, the zones 42, 44 of the support surface 16a of the plate 16 space the friction material 18 from the side walls of the seat 8 which houses the pad 10, creating a first recess 46 and a second recess 48, defined between the side wall of the seat 8 and the surface of the friction material 18.

In a configuration in which the caliper body is mounted astride the brake disc provided with the annular braking surfaces, the recesses are defined by the braking surface of the brake disc, as well as by the side walls of the seat 8 and by the lateral surfaces of the friction material 18.

In a mounted configuration of the disc brake, in which the caliper is arranged astride the brake disc, the braking surface of the band of the disc at least partially overlaps the zones of the pad 10 which are free of friction material.

In other words, if the braking surface of the brake disc is projected axially onto the support surface 16a of the plate 16, the projection also covers the zones of the support surface which are free of friction material.

Stated in yet another way, since the friction material 18 is spaced from the side walls of the seat 8 which houses the plate 16, its interaction with a portion of the braking surface of the brake disc during braking is avoided in the vicinity of the side wall 12a of the seat for the pad.

During braking, the pad 10 is moved towards the braking surface of the brake disc by suitable actuating means (not shown) such as hydraulic pistons or the like.

The friction material bears on and, by virtue of the actuation means, presses against, a portion of the braking surface of the brake disc, bringing about a braking action due to the frictional forces which are generated by the interaction of the friction material with the braking surface of the brake disc.

The pad 10, which is dragged along by the rotation of the disc, is brought into abutment with one of the side walls of the seat 8 which houses it. In other words, the pad 10 is dragged along by the rotating disc so that the first abutment surface 20 of the plate 16 is brought into abutment with the first side wall 12a of the seat 8 of the caliper body 2 or, according to the direction of rotation of the disc, so that the second abutment surface 22 of the plate 16 is brought into abutment with the second side wall 12b of the seat 8 of the caliper body 2.

The contact between one of the abutment surfaces of the plate 16 and one of the side walls of the seat 8 of the caliper body 2 enables the braking force to be transferred from the pad 10 to the caliper body 2.

The energy possessed by the moving vehicle is dissipated by the action of the frictional forces, producing a proportional amount of heat most of which remains in the brake disc and, the remaining portion of which flows towards the caliper body, through the pad.

However, the heat produced is obstructed in its flow towards the side walls of the seat of the caliper body by the presence of the zones 42, 44 of the support surface 16a of the plate 16 which are free of friction material, since these zones space the friction material 18, in which the heat is produced, from the side walls of the seat B.

In other words, the free zones, which act as elements for spacing the friction material 18 from the side walls of the seat 8 of the caliper body 2, produce a high temperature gradient between the friction material and the side wall of the seat 8.

The rotation of the brake disc during normal operation also causes air turbulence in the vicinity of the pad.

In particular, the first recess 46 and the second recess 48 enhance this turbulence, acting substantially as cooling ducts.

In fact, the air which passes over the friction material 18, the plate 16, and the seat 8 for the pad 10, helps to cool these members.

Moreover, the first recess and the second recess form ducts for discharging the dust which is released from the friction material 18 as a result of each braking operation.

These recesses, which are disposed in the vicinity of the disc, are advantageously in communication with the outside atmosphere through the opening 9 provided in the axial covering region of the caliper body 2.

The air turbulence caused by the rotation of the brake disc in a normal operating condition brings about cooling of the pad seat and entrainment of the dust towards the exterior.

Unusually, the disc brake pad according to the invention can limit the flow of heat between the pad and the caliper body which houses it.

In fact, principally in compact caliper-body constructions, the pad is substantially enveloped by the material of the caliper body and is in communication with the outside atmosphere through the opening provided in the caliper body.

The zones of the support surface for the friction material which are free of friction material advantageously form a space which space the material from the side walls of the pad seat, obstructing the flow of heat generated by the friction material during braking, towards the caliper body.

Advantageously, the friction material is recessed towards the interior of the support surface of the pad and is spaced from the peripheral surface of the plate principally in the region of the abutment surfaces thereof.

This limits the flow of heat from the friction material towards the side walls of the seat which, during braking, are subject to large loads due to the abutment of the plate against them, limiting wear of the seat walls due to the effect of the loads and of the temperature.

Moreover, the provision of zones of the support surface of the plate which are free of friction material improves the reliability of the entire brake unit.

It is indeed true that, if the surface area of the friction material which is active during braking is reduced whilst its thickness is kept constant, in order to limit axial dimensions, the friction material must work at a higher specific pressure to achieve the same braking action.

As evidence of this, it suffices to stress that the currently established practice in the production of disc brake pads provides for the whole of the surface available on the plate to be occupied, up to the peripheral edge of the plate.

The object of this construction is to extend as far as possible the area of the friction material which is active during braking so as to reduce the specific working pressure of the material for a given braking power, increasing the average life expectancy of the pads.

The pads according to the invention have demonstrated that, although the surface area of the friction material which is active during braking is reduced, the reliability of the brake unit as a whole is improved thereby since the spacing of the friction material from the side walls of the seat improves the working conditions, reducing the flow of heat towards the caliper body.

According to a further advantageous aspect, the friction material is spaced from the side walls of the seat so that the lateral regions of the friction material are arranged radially relative to the brake disc with which the caliper is associated. In particular, this enables zones which are free of friction material to be provided close to the centre of the disc.

Another advantageous aspect of the pad according to the invention is that the zones free of friction material that are provided on the plate define recesses which act as cooling ducts. In fact, the normal air turbulence produced by the rotating brake disc is enhanced inside these recesses which form cooling ducts, since they are in communication with exterior.

Furthermore, the recesses act as ducts for discharging the dust which the friction material releases after each braking operation, advantageously preventing the dust from accumulating in the pad seat.

Naturally, in order to satisfy contingent and specific requirements, a person skilled in the art will be able to apply many modifications and variations to the above-described disc brake pad.

In a further variant, for example, the zones of the plate which are free of friction material have a general polygonal configuration defined, for example, by straight or curved portions of the lateral region of the friction material and/or of the abutment surface of the plate.

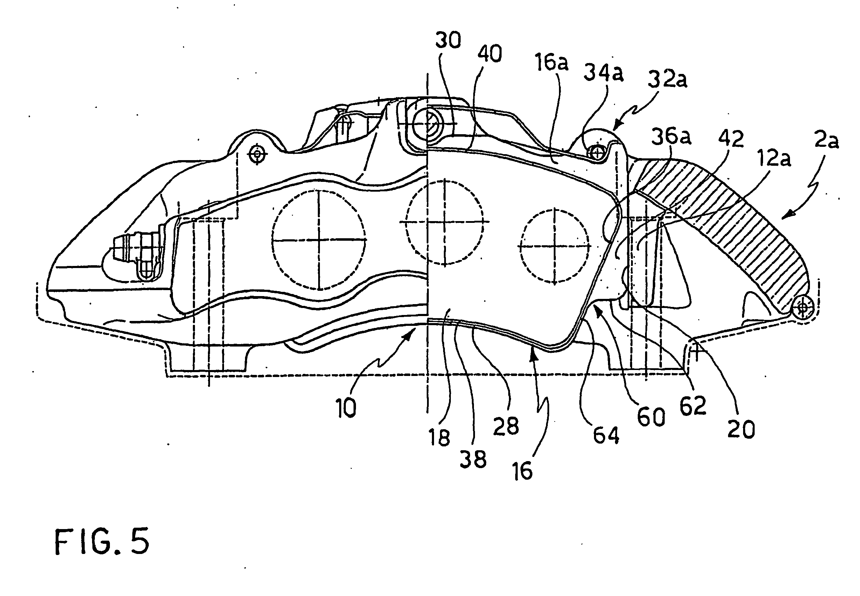

According to a further variant of the pad according to the invention (Figure 5), the plate 16 for supporting the friction material 18 has, along its peripheral surface, the abutment surface 20, connected to the lower surface 28 by means of a re-entrant surface 60.

The re-entrant surface has a first portion 62 substantially perpendicular to the abutment surface 20 and a second portion 64 arranged substantially radially relative to the brake disk which can be associated with the caliper body that is to house the pad.

The friction material 18 is arranged on the support surface 16a of the plate 16 in a manner such that the lower arcuate region 38 faces towards the lower surface 28 of the plate 16 and the upper arcuate region 40 faces towards the upper surface 30 of the plate 16.

The lateral region 36a of the friction material 18, which is arranged substantially radially relative to the brake disc that can be associated with the caliper body which is to house the pad, faces towards the abutment surface 20 of the plate and defines, together with the abutment surface 20 and with the first portion 62 of the re-entrant surface 60, a zone 42 which is free of friction material.

The zone which is free of friction material is substantially triangular.

During braking, the abutment surface 20 of the plate 16 is brought into abutment with the side wall 12a of the seat 8 for the pad 10. The zone 42 which is free of friction material spaces the friction material from the abutment surface 20 in the region of the abutment between the plate 16 and the side wall 12a of the pad seat 8.

The second portion 64 of the re-entrant surface 60, which is not involved in the abutment during a braking operation, is recessed relative to the abutment surface 20 of the plate 16, towards and into alignment with the lateral region 36a of the friction material 18.

In a further variant, each half-portion of the caliper body is suitable for housing more than one pad, for example, two pads. Naturally, in this case, whilst the structure of the caliper body is modified for this purpose in accordance with methods known in the art, the particular characteristics of the pad according to the invention remain substantially unchanged.

Naturally these variants are also intended to be included within the scope of protection of the invention as defined by the appended claims.

## Claims

1. A disc brake pad (10) suitable for cooperating with a fixed-caliper disc brake comprising a caliper body (2) provided with at least one seat (8) suitable for housing the pad, in which
the seat is partially defined at least by a side wall (12a, 12b), the pad comprising:
a plate (16) which is defined by a peripheral surface having at least one abutment surface (20, 22) and which has a support surface (16a) for supporting friction material (18),
a first abutment surface (20) is parallel and opposite a second abutment surface (22) and they are connected to a lower surface (28),
the first abutment surface (20) and the second abutment surface (22) are connected to the lower surface (28), respectively, by a first connecting surface (24) and by a second connecting surface (26) which are not parallel to the abutment surfaces (20,22),
the peripheral surface of the plate (16) comprises an upper surface (30) connected directly to the first abutment surface (20) and to the second abutment surface (22), on the side remote from the connecting surface (24) and from the second connecting surface (26), respectively,
in the region of the upper surface (30) the plate (16) has a first projection (32a) and a second projection (32b), in which a first through-hole (34a) and a second through-hole (34b), which are slot-shaped, are formed,
in which
in a braking configuration, the abutment surface (20, 22) of the peripheral surface of the plate (16) is in abutment with the side wall (12a, 12b) of the seat (8) of the caliper body (2),
the pad further comprising at least one zone (42,44) of the support surface (16a) of the plate (16) free of friction material (18) and suitable for spacing the friction material (18) of the pad (10) from the abutment surface (20, 22) of the plate (16),
the friction material (18) is shaped in a manner such that its peripheral surface comprises at least one lateral region (36a, 36b) which faces towards the abutment surface (20, 22) when the friction material is supported by the plate (16),
the lateral region (36a, 36b) of the peripheral surface of the friction material (18) is not arranged parallel to the abutment surface (20, 22) of the plate (16),
wherein,
the lateral region (36a, 36b) of the peripheral surface of the friction material (18) is recessed towards the interior of the plate and the friction material (18) is shaped in a manner such that its peripheral surface comprises at least one lower arcuate region (38),
**characterised in that**,
the zones of the support surface (16a) of the plate (16) which are free of friction material are substantially triangular, since the lateral region of the friction material, the abutment surface, and the connecting surface of the plate, which delimit them, are substantially flat,
said lower arcuate region (38) substantially follows the lower surface (28) of the plate (16), and
said lateral region (36a,36b) of the peripheral surface of the friction material (18) adopt a substantially radial arrangement relative to the brake disc with which the caliper body which houses the pads can be associated,
in order to extend as far as possible the area of friction material which is active during braking so as to reduce the specific working pressure of the material for a given braking power, increasing the average life expectancy of the pads at the same time.

2. A pad (10) according to Claim 1 in which the zone (42,44) is suitable for limiting the flow of heat generated during braking, from the pad (10) to the caliper body (2) which houses it.

3. A pad (10) according to any one of the preceding claims in which said pad (10) is suitable to be housed in a seat (8) of a caliper body 82), the seat being accessible from an opening (9) provided in an axial covering region (6) of half-portions (2a,2b) of the caliper body (2).

4. A pad (10) according to any one of the preceding claims in which said pad is suitable to be enveloped by the material of a caliper body, when housed in a seat of the caliper body.

5. A pad (10) according to any one of the preceding claims in which a first abutment surface (20) and a second abutment surface (22) of the plate (16) are arranged facing a first side wall (12a) and a second side wall (12b) of a seat (8) of a caliper body (2), respectively.

6. A pad (10) according to any one of the preceding claims in which the friction material (18) is shaped in a manner such that its peripheral surface comprises an upper arcuate region (40).

7. A pad (10) according to Claim 6 in which the plate is shaped in a manner such that its peripheral surface comprises an upper surface (30).

8. A pad (10) according to Claim 7 in which the upper arcuate region (40) of the friction material (18) supported on the support surface (16a) follows the upper surface (30) of the plate (16).

9. A pad (10) according to any one of Claims 1 to 8 in which the space defined between the zone (42, 44) of the plate (16) which is free of friction material and the braking surface of the brake disc that can be associated with the pad forms a recess (46, 48).

10. A pad (10) according to Claim 9 in which the recess (46, 48) forms a cooling duct which is in communication with the atmosphere outside the caliper body (2).

11. A pad (10) according to Claim 9 or Claim 10 in which the recess (46, 48) forms a duct for discharging dust resulting from wear, dispersed by the friction material (18).

12. A pad (10) according to any one of Claims 9 to 11 in which the braking surface of the brake disc which can be associated with the caliper body at least partially covers the zone (42, 44) of the support surface (16a) of the plate (16) which is free of friction material.

13. A pad (10) according to Claim 12 in which the braking surface completely covers the zone (42, 44) of the support surface (16a) of the plate (16) which is free of friction material.

14. A fixed disc-brake caliper comprising a caliper body (2) and a pad (10) according to any one of the preceding claims, wherein the caliper body (2) is arranged astride a brake disc, comprising an outer half-portion (2a) of the caliper body 82) disposed between a vehicle wheel and the brake disc, and an inner half-portion (2b), disposed on the opposite of the disc to the outer half-portion (2a).

15. A fixed disc-brake caliper (2) according to claim 14, wherein the caliper body (2) is in a single piece.

16. A fixed disc-brake caliper according to any one of the claims 14 to 15, wherein the caliper body (2) is in two half-bodies.

17. A fixed disc-brake caliper according to any one of the claims 14 to 16, wherein each half-portion (2a,2b) comprises an axial covering region (6), wherein the axial covering regions of the outer half-portion (2a) and of the inner half-portion (2b) of the caliper body (2) form the brake-disc cover which spans the disc.

18. A fixed disc-brake caliper according to claim 17, wherein the axial covering (6) has an opening (9) which can put the outside atmosphere into communication with the space inside the caliper body (2).

19. A fixed disc-brake caliper according to claim 18, wherein each of the outer half-portion (2a) and the inner half-portion (2b) of the caliper body (2) have at least one seat (8) suitable for housing a pad (10),
wherein said seat (8) is defined by a first side wall (12a) and a second side wall (12b), as well as by a base wall (14), said side walls and said base wall, are connected to one another continuously, forming a type of housing, closed on at least three sides, for housing the pad (10).

## Patentansprüche

1. Ein Scheibenbremsenbelag (10), der zum Zusammenarbeiten mit einer Scheibenbremse mit einem Festsattel geeignet ist, die einen Sattelkörper (2) aufweist, der mit zumindest einem Sitz (8) versehen, der zum Häusen des Bremsbelags geeignet ist, wobei
der Sitz teilweise zumindest durch eine Seitenwand (12a, 12b) definiert ist, wobei der Bremsbelag folgende Merkmale aufweist:
eine Platte (16), die durch eine peripherale Oberfläche definiert ist, die zumin-dest eine Anstoßoberfläche (20, 22) aufweist und die eine Stützoberfläche (16a) zum Stützen eines Reibungsmaterials (18) aufweist,
eine erste Anstoßoberfläche (20) parallel und
entgegengesetzt zu einer zweiten Anstoßoberfläche (22) ist und dieselben mit einer unteren Oberfläche (28) ver-bunden sind,
die erste Anstoßoberfläche (20) und die zweite Anstoßoberfläche (22) mit der unteren Oberfläche (28) durch eine erste Verbindungsoberfläche (24) bzw. durch eine zweite Verbindungsoberfläche (26) verbunden sind, die nicht parallel zu den Anstoßoberflächen (20, 22) sind,
die peripherale Oberfläche der Platte (16) eine obere Oberfläche (30), die direkt mit der ersten Anstoßoberfläche (20) und mit der zweiten Anstoßoberfläche (22) verbunden ist, auf der von der Verbindungsoberfläche (24) bzw. von der zweiten Verbindungsoberfläche (26) entfernten Seite aufweist,
in dem Bereich der oberen Oberfläche (30) die Platte (16) einen ersten Vor-sprung (32a) und einen zweiten Vorsprung (32b) aufweist, in denen ein erstes Bohrloch (34a) bzw. ein zweites Bohrloch (34b) gebildet sind, die schlitzförmig sind,
wobei
bei einer Bremskonfiguration die Anstoßoberfläche (20, 22) der peripheralen Oberfläche der Platte (16) in einem Anstoß mit der Seitenwand (12a, 12b) des Sitzes (8) des Sattelkörpers (2) ist,
wobei der Bremsbelag ferner zumindest eine Zone (42, 44) der Stützoberfläche (16a) der Platte (16) aufweist, die frei von dem Reibungsmaterial (18) und zum Beabstanden des Reibungsmaterials (18) des Bremsbelags (10) von der Anstoßoberfläche (20, 22) der Platte (16) geeignet ist,
das Reibungsmaterial (18) in einer Weise geformt ist, derart, dass die peripherale Oberfläche desselben zumindest einen lateralen Bereich (36a, 36b) aufweist, der zu der Anstoßoberfläche (20, 22) hin gewandt ist, wenn das Reibungsmaterial durch die Platte (16) gestützt ist,
der laterale Bereich (36a, 36b) der peripheralen Oberfläche des Reibungsmate-rials (18) nicht parallel zu der Anstoßoberfläche (20, 22) der Platte (16) ange-ordnet ist,
wobei
der laterale Bereich (36a, 36b) der peripheralen Oberfläche des Reibungsmate-rials (18) zu dem Inneren der Platte hin zurückgesetzt ist und das Reibungsma-terial (18) in einer Weise geformt ist, derart, dass die peripherale Oberfläche desselben zumindest einen niedrigeren bogenförmigen Bereich (38) aufweist,
**dadurch gekennzeichnet,**
**dass** die Zonen der Stützoberfläche (16a) der Platte (16), die frei von Rei-bungsmaterial sind, im Wesentlichen dreieckig sind, da der laterale Bereich des Reibungsmaterials, die Anstoßoberfläche und die Verbindungsoberfläche der Platte, die dieselben abgrenzen, im Wesentlichen flach sind, der niedrigere bogenförmige Bereich (38) im Wesentlichen der niedrigeren Oberfläche (28) der Platte (16) folgt und
der laterale Bereich (36a, 36b) der peripheralen Oberfläche des Reibungsmate-rials (18) eine im Wesentlichen radiale Anordnung relativ zu der Bremsscheibe übernimmt, der der Sattelkörper, der die Bremsklötze häust, zugeordnet werden kann,
um die Fläche des Reibungsmaterials, die während eines Bremsens aktiv ist, so weit wie möglich zu erstrecken, um den spezifischen Arbeitsdruck des Materials für eine gegebene Bremsleistung zu reduzieren, was gleichzeitig die Durch-schnittslebenserwartung der Bremsbeläge erhöht.

2. Ein Bremsbelag (10) gemäß Anspruch 1, bei dem die Zone (42, 44) zum Begrenzen des Wärmeflusses von dem Bremsbelag (10) zu dem Sattelkörper (2), der denselben häust, geeignet ist, der während eines Bremsens erzeugt wird.

3. Ein Bremsbelag (10) gemäß einem der vorhergehenden Ansprüche, wobei der Bremsbelag (10) dazu geeignet ist, in einem Sitz (8) eines Sattelkörpers (2) gehäust zu sein, wobei auf den Sitz von einer Öffnung (9) zugegriffen werden kann, die in einem axialen Abdeckbereich (6) von Halbabschnitten (2a, 2b) des Sattelkörpers (2) bereitgestellt ist.

4. Ein Bremsbelag (10) gemäß einem der vorhergehenden Ansprüche, wobei der Bremsbelag dazu geeignet ist, durch das Material eines Sattelkörpers umhüllt zu sein, wenn derselbe in einem Sitz des Sattelkörpers gehäust ist.

5. Ein Bremsbelag (10) gemäß einem der vorhergehenden Ansprüche, bei dem eine erste Anstoßoberfläche (20) und eine zweite Anstoßoberfläche (22) der Platte (16) einer ersten Seitenwand (12a) bzw. einer zweiten Seitenwand (12b) eines Sitzes (8) eines Sattelkörpers (2) zugewandt angeordnet sind.

6. Ein Bremsbelag (10) gemäß einem der vorhergehenden Ansprüche, bei dem das Reibungsmaterial (18) in einer Weise geformt ist, derart, dass die peripherale Oberfläche desselben einen oberen bogenförmigen Bereich (40) aufweist.

7. Ein Bremsbelag (10) gemäß Anspruch 6, bei dem die Platte in einer Weise geformt ist, derart, dass die peripherale Oberfläche derselben eine obere Ober-fläche (30) aufweist.

8. Ein Bremsbelag (10) gemäß Anspruch 7, bei dem der obere bogenförmige Bereich (40) des Reibungsmaterials (18), das an der Stützoberfläche (16a) ge-stützt ist, der oberen Oberfläche (30) der Platte (16) folgt.

9. Ein Bremsbelag (10) gemäß einem der Ansprüche 1 bis 8, bei dem der Raum, der zwischen der Zone (42, 44) der Platte (16), die frei von einem Reibungsma-terial ist, und der Bremsoberfläche der Bremsscheibe, die dem Bremsbelag zu-geordnet werden kann, eine Ausnehmung (46, 48) bildet.

10. Ein Bremsbelag (10) gemäß Anspruch 9, bei dem die Ausnehmung (46, 48) einen Kühlungskanal bildet, der in einer Kommunikation mit der Atmosphäre außerhalb des Sattelkörpers (2) steht.

11. Ein Bremsbelag (10) gemäß Anspruch 9 oder Anspruch 10, bei dem die Ausnehmung (46, 48) einen Kanal zum Abgeben von Staub bildet, der aus Ab-nutzung resultiert, dispergiert durch das Reibungsmaterial (18).

12. Ein Bremsbelag (10) gemäß einem der Ansprüche 9 bis 11, bei dem die Bremsoberfläche der Bremsscheibe, die dem Sattelkörper zugeordnet werden kann, zumindest teilweise die Zone (42, 44) der Stützoberfläche (16a) der Platte (16), die frei von einem Reibungsmaterial ist, bedeckt.

13. Ein Bremsbelag (10) gemäß Anspruch 12, bei dem die Bremsoberfläche die Zone (42, 44) der Stützoberfläche (16a) der Platte (16), die frei von einem Rei-bungsmaterial ist, vollständig bedeckt.

14. Ein Scheibenbremsenfestsattel, der einen Sattelkörper (2) und einen Bremsbe-lag (10) gemäß einem der vorhergehenden Ansprüche aufweist, wobei der Sat-telkörper (2) gespreizt auf einer Bremsscheibe angeordnet ist und einen äußeren Halbabschnitt (2a) des Sattelkörpers (2), der zwischen einem Fahrzeugrad und der Bremsscheibe angeordnet ist, und einen inneren Halbabschnitt (2b), der zu dem äußeren Halbabschnitt (2a) auf der gegenüberliegenden Seite der Scheibe angeordnet ist, aufweist.

15. Ein Scheibenbremsenfestsattel gemäß Anspruch 14, wobei der Sattelkörper (2) einstückig ist.

16. Ein Scheibenbremsenfestsattel gemäß einem der Ansprüche 14 bis 15, wobei der Sattelkörper (2) in zwei Halbkörpern ist.

17. Ein Scheibenbremsenfestsattel gemäß einem der Ansprüche 14 bis 16, bei dem jeder Halbabschnitt (2a; 2b) einen axialen Abdeckbereich (6) aufweist, bei dem die axialen Abdeckbereiche des äußeren Halbabschnitts (2a) und des inneren Halbabschnitts (2b) des Sattelkörpers (2) die Bremsscheibenabdeckung bilden, die die Scheibe überspannt.

18. Ein Scheibenbremsenfestsattel gemäß Anspruch 17, wobei die axiale Abde-ckung (6) eine Öffnung (9) aufweist, die die Außenatmosphäre in eine Kommu-nikation mit dem Raum im Inneren des Sattelkörpers (2) bringen kann.

19. Ein Scheibenbremsenfestsattel gemäß Anspruch 18, bei dem jeder äußere Halbabschnitt (2a) und jeder innere Halbabschnitt (2b) des Sattelkörpers (2) zumindest einen Sitz (8) aufweisen, der zum Häusen eines Bremsbelags (10) geeignet ist, wobei der Sitz (8) durch eine erste Seitenwand (12a) und eine zweite Seitenwand (12b) sowie eine Basiswand (14) definiert ist, wobei die Sei-tenwände und die Basiswand durchgehend miteinander verbunden sind und ei-nen Typ eines Gehäuses zum Häusen des Bremsbelags (10) bilden, das an zumindest drei Seiten geschlossen ist.

## Revendications

1. Plaquette de frein à disque (10) appropriée pour coopérer avec un frein à disque fixé par étrier comprenant un corps d'étrier (2) prévu avec au moins un siège (8) approprié pour loger la plaquette, dans laquelle :
le siège est partiellement défini au moins par une paroi latérale (12a, 12b), la plaquette comprenant :
une plaque (16) qui est définie par une surface périphérique ayant au moins une surface de butée (20, 22) et qui a une surface de support (16a) pour supporter le matériau de frottement (18),
une première surface de butée (20) est parallèle et opposée à une seconde surface de butée (22) et elles sont reliées à une surface inférieure (28),
la première surface de butée (20) et la seconde surface de butée (22) sont reliées à la surface inférieure (28), respectivement, par une première surface de liaison (24) et par une seconde surface de liaison (26) qui ne sont pas parallèles aux surfaces de butée (20, 22),
la surface périphérique de la plaque (16) comprend une surface supérieure (30) reliée directement à la première surface de butée (20) et à la seconde surface de butée (22), sur le côté éloigné de la surface de liaison (24) et de la seconde surface de liaison (26), respectivement,
dans la région de la surface supérieure (30) la plaque (16) a une première protubérance (32a) et une seconde protubérance (32b) où un premier trou traversant (34a) et un second trou traversant (34b), qui sont en forme de fente, sont formés,
dans laquelle
dans une configuration de freinage, la surface de butée (20, 22) de la surface périphérique de la plaque (16) est en butée avec la paroi latérale (12a, 12b) du siège (8) du corps d'étrier (2),
la plaquette comprenant en outre au moins une zone (42, 44) de la surface de support (16a) de la plaque (16) dépourvue de matériau de frottement (18) et appropriée pour éloigner le matériau de frottement (18) de la plaquette (10) de la surface de butée (20, 22) de la plaque (16),
le matériau de frottement (18) est formé de sorte que sa surface périphérique comprend au moins une région latérale (36a, 36b) qui fait face à la surface de butée (20, 22) lorsque le matériau de frottement est supporté par la plaque (16),
la région latérale (36a, 36b) de la surface périphérique du matériau de frottement (18) n'est pas agencée parallèlement à la surface de butée (20, 22) de la plaque (16),
dans laquelle,
la région latérale (36a, 36b) de la surface périphérique du matériau de frottement (18) est évidée vers l'intérieur de la plaque et le matériau de frottement (18) est formé de sorte que sa surface périphérique comprend au moins une région arquée inférieure (38),
**caractérisée en ce que**,
les zones de la surface de support (16a) de la plaque (16) qui sont dépourvues de matériau de frottement sont sensiblement triangulaires, puisque la région latérale du matériau de frottement, la surface de butée et la surface de liaison de la plaque, qui les délimite, sont sensiblement plates,
ladite région arquée inférieure (38) suit sensiblement la surface inférieure (28) de la plaque (16), et
ladite région latérale (36a, 36b) de la surface périphérique du matériau de frottement (18) adopte un agencement sensiblement radial par rapport au disque de frein avec lequel le corps d'étrier qui loge les plaquettes, peut être associé,
pour étendre le plus possible l'aire de matériau de frottement qui est active pendant le freinage de manière à réduire la pression de travail spécifique du matériau pour une puissance de freinage donnée, en augmentant l'espérance de vie moyenne des plaquettes en même temps.

2. Plaquette (10) selon la revendication 1, dans laquelle la zone (42, 44) est appropriée pour limiter l'écoulement de chaleur généré pendant le freinage, de la plaquette (10) au corps d'étrier (2) qui la loge.

3. Plaquette (10) selon l'une quelconque des revendications précédentes, dans laquelle ladite plaquette (10) est appropriée pour être logée dans un siège (8) d'un corps d'étrier (2), le siège étant accessible à partir d'une ouverture (9) prévue dans une région de recouvrement axial (6) des demi-parties (2a, 2b) du corps d'étrier (2).

4. Plaquette (10) selon l'une quelconque des revendications précédentes, dans laquelle ladite plaquette est appropriée pour être enveloppée par le matériau d'un corps d'étrier, lorsqu'il est logé dans un siège du corps d'étrier.

5. Plaquette (10) selon l'une quelconque des revendications précédentes, dans laquelle une première surface de butée (20) et une seconde surface de butée (22) de la plaque (16) sont agencées en face d'une première paroi latérale (12a) et d'une seconde paroi latérale (12b) d'un siège (8) d'un corps d'étrier (2), respectivement.

6. Plaquette (10) selon l'une quelconque des revendications précédentes, dans laquelle le matériau de frottement (18) est formé de sorte que sa surface périphérique comprend une région arquée supérieure (40).

7. Plaquette (10) selon la revendication 6, dans laquelle la plaque est formée de sorte que sa surface périphérique comprend une surface supérieure (30).

8. Plaquette (10) selon la revendication 7, dans laquelle la région arquée supérieure (40) du matériau de frottement (18) supporté sur la surface de support (16a) suit la surface supérieure (30) de la plaquette (16).

9. Plaquette (10) selon l'une quelconque des revendications 1 à 8, dans laquelle l'espace défini entre la zone (42, 44) de la plaque (16) qui est dépourvue de matériau de frottement et la surface de freinage du disque de frein qui peut être associée à la plaquette, forme un évidement (46, 48).

10. Plaquette (10) selon la revendication 9, dans laquelle l'évidement (46, 48) forme un conduit de refroidissement qui est en communication avec l'atmosphère à l'extérieur du corps d'étrier (2).

11. Plaquette (10) selon la revendication 9 ou la revendication 10, dans laquelle l'évidement (46, 48) forme un conduit pour décharger la poussière provenant de l'usure, dispersée par le matériau de frottement (18).

12. Plaquette (10) selon l'une quelconque des revendications 9 à 11, dans laquelle la surface de freinage du disque de frein qui peut être associée au corps d'étrier recouvre au moins partiellement la zone (42, 44) de la surface de support (16a) de la plaque (16) qui est dépourvue de matériau de frottement.

13. Plaquette (10) selon la revendication 12, dans laquelle la surface de freinage recouvre complètement la zone (42, 44) de la surface de support (16a) de la plaque (16) qui est dépourvue de matériau de frottement.

14. Etrier de frein à disque fixe comprenant un corps d'étrier (2) et une plaquette (10) selon l'une quelconque des revendications précédentes, dans lequel le corps d'étrier (2) est agencé à cheval sur un disque de frein, comprenant une demi-partie externe (2a) du corps d'étrier (2) disposée entre une roue de véhicule et le disque de frein, et une demi-partie interne (2b), disposée à l'opposé du disque par rapport à la demi-partie externe (2a).

15. Etrier de frein à disque fixe selon la revendication 14, dans lequel le corps d'étrier (2) est d'un seul tenant.

16. Etrier de frein à disque fixe selon l'une quelconque des revendications 14 à 15, dans lequel le corps d'étrier (2) est en deux demi-corps.

17. Etrier de frein à disque fixe selon l'une quelconque des revendications 14 à 16, dans lequel chaque demi-partie (2a, 2b) comprend une région de recouvrement axial (6), dans lequel les régions de recouvrement axial de la demi-partie externe (2a) et de la demi-partie interne (2b) du corps d'étrier (2) forment un couvercle de disque de frein qui recouvre le disque.

18. Etrier de frein à disque fixe selon la revendication 17, dans lequel le recouvrement axial (6) a une ouverture (9) qui peut placer l'atmosphère externe en communication avec l'espace à l'intérieur du corps d'étrier (2).

19. Etrier de frein à disque fixe selon la revendication 18, dans lequel chacune de la demi-partie externe (2a) et de la demi-partie interne (2b) du corps d'étrier (2) ont au moins un siège (8) approprié pour loger une plaquette (10), dans lequel ledit siège (8) est défini par une première paroi latérale (12a) et une seconde paroi latérale (12b), ainsi que par une paroi de base (14), lesdites parois latérales et ladite paroi de base, sont raccordées entre elles de manière continue, formant un type de logement, fermé sur au moins trois côtés, pour loger la plaquette (10).
